# EUROPEAN PATENT APPLICATION

(11) **EP 4 475 249 A1**
(43) Date of publication of application: **11.12.2024**
(21) Application number: 24178322.4
(22) Date of filing: 27.05.2024
(51) Int. Cl.: H01M 10/052, H01M 10/655, H01M 50/209, H01M 50/211, H01M 50/244, H01M 50/593

(54) **BATTERY ASSEMBLY**

(30) Priority: 09.06.2023 KR 20230073969
(71) Applicant: SK On Co., Ltd., Seoul 03161 (KR)
(72) Inventor: CHOI, Ha Neul, 34124 Daejeon (KR); LEE, Seok Hwan, 34124 Daejeon (KR); CHO, Sei Hoon, 34124 Daejeon (KR)
(74) Representative: Stolmár & Partner Patentanwälte PartG mbB

(57) **Abstract**

A battery assembly of the present disclosure may include a plurality of battery cells stacked in a preset stacking direction, an accommodation case which accommodates the plurality of battery cells therein, and one or more heat transfer parts which are located between the plurality of battery cells and in contact with a first surface and a second surface opposite to the first surface of the accommodation case, wherein the plurality of battery cells may be positioned to be spaced apart from the first surface and the second surface.

## Description

### BACKGROUND

### 1. Field of the Disclosure

The present disclosure relates to a battery assembly. Specifically, the present disclosure relates to a battery assembly in which an accommodation case is spaced apart from a battery.

### 2. Discussion of Related Art

Secondary batteries are batteries which are formed to convert electrical energy to chemical energy and store the chemical energy so they can be reused multiple times through charging and discharging. Secondary batteries are widely used throughout industry due to their economical and eco-friendly characteristics. Specifically, among secondary batteries, lithium secondary batteries are widely used throughout industry including portable devices that require high-density energy.

The operating principle of the lithium secondary battery is an electrochemical oxidation-reduction reaction. That is, the operating principle is that electricity is generated by the movement of lithium ions and charging is performed through the reverse process. In the case of lithium secondary batteries, a process, in which the lithium ions exit the anode and move to the cathode through an electrolyte and a separator, is referred to as discharging. In addition, a reverse process with respect to this process is referred to as charging.

A secondary battery may generate a large amount of heat in the charging and discharging process. When the heat generated in the secondary battery is not suppressed quickly, a fire can propagate to adjacent battery cells to cause significant damage.

In addition, when charging and discharging are repeated, swelling can occur, which applies unexpected pressure to adjacent battery cells and thus significant damage may occur.

Accordingly, suppressing the temperature rise occurring when a secondary battery is used and suppressing damage due to pressure are emerging as major challenges.

### SUMMARY OF THE INVENTION

The present disclosure is directed to preventing damage to a battery assembly by applying uniform surface pressure to a battery cell.

The present disclosure is also directed to improving the stability of a battery assembly by uniformly managing a temperature rise and suppressing an excessive temperature rise of a battery cell.

The present disclosure is also directed to improving the structural stability of a battery assembly and preventing damage due to external pressure by minimizing the deviation of a battery cell from a preset position.

The present disclosure may be widely applied to green technology fields such as electric vehicles and battery charging stations in addition to solar power generation and wind power generation that use batteries. In addition, the present disclosure can be used for eco-friendly electric vehicles, hybrid vehicles, and the like to prevent climate change by suppressing air pollution and greenhouse gas emission.

According to an aspect of the present disclosure, there is provided a battery assembly including a plurality of battery cells stacked in a preset stacking direction, an accommodation case which accommodates the plurality of battery cells therein, and one or more heat transfer parts which are located between the plurality of battery cells and in contact with a first surface and a second surface opposite to the first surface of the accommodation case, wherein the plurality of battery cells are positioned to be spaced apart from the first surface and the second surface.

The accommodation case may further include an accommodation body which includes the first surface and forms an accommodation space and an accommodation cover which covers the accommodation body and includes the second surface.

The accommodation case may further include a side body which connects the first surface and the second surface and presses the plurality of battery cells.

The side body may include a facing surface facing the plurality of battery cells, and the facing surface may be inclined.

The accommodation case may further include an opening, which is an open surface, and the side body may be inclined toward the plurality of battery cells as a distance from the opening increases.

The battery assembly may further include a pressing part which is located between the side body and the plurality of battery cells and presses the plurality of battery cells.

The heat transfer part may be located between cell groups each grouped into a preset number of battery cells among the plurality of battery cells.

The battery assembly may further include a coupling part which couples a battery cell adjacent to the heat transfer part among the plurality of battery cells and the heat transfer part.

A length of the heat transfer part in a direction from the first surface toward the second surface may be greater than or equal to a length of the plurality of battery cells.

The battery assembly may further include a busbar assembly which electrically connects the plurality of battery cells.

The busbar assembly may include a busbar in contact with the plurality of battery cells and a busbar frame which is electrically insulated from the busbar, couples the busbar to the accommodation case, and is provided with a through hole.

The battery assembly may further include a filler which is provided in the accommodation case and in contact with at least portions of the plurality of battery cells.

The filler may be formed of an insulating material.

The filler may be formed of a coolant for decreasing a temperature of the plurality of battery cells.

The heat transfer part may include a main body in contact with the plurality of battery cells and a contact portion which extends from each of both ends of the main body, is in contact with the accommodation case, and is formed in a circular or polygonal shape.

The accommodation case may include a recessed portion which is formed by recessing one region of the accommodation case and in which each of the one or more heat transfer parts is located.

The recessed portion may extend in a direction from the first surface toward the second surface and in a direction perpendicular to the stacking direction.

The heat transfer part may move a preset moving distance or less in the stacking direction due to the recessed portion.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a view illustrating a battery cell according to the present disclosure;
FIGS. 2 and 3 are views illustrating a battery assembly according to the present disclosure;
FIG. 4 is a view illustrating a battery assembly according to another embodiment of the present disclosure;
FIG. 5 is a view illustrating coupling parts according to the present disclosure;
FIG. 6 is a view illustrating a busbar assembly according to the present disclosure;
FIG. 7 is an enlarged view illustrating region A of FIG. 2;
FIG. 8A and FIG. 8B are a set of views each illustrating heat transfer parts according to another embodiment of the present disclosure; and
FIG. 9 is a view illustrating an accommodation case according to another embodiment of the present disclosure.

### DETAILED DESCRIPTION OF EXEMPLARY EMBODIMENTS

Hereinafter, exemplary embodiments of the present disclosure will be described in detail with reference to the accompanying drawings. The configurations or control methods of apparatuses which will be described below are only for describing the embodiments of the present disclosure and not for limiting the scope of the present disclosure, and like reference numerals refer to like elements throughout the specification.

Specific terms used in the present specification are only for the sake of convenience in the description and are not used to limit the embodiments.

For example, a description such as "same" and "is the same as" not only indicates exactly the same state but also indicates a state in which there is a tolerance or difference with which the same function is obtained.

For example, a description representing a relative or absolute arrangement such as "face a direction," "in a direction," "side by side," "vertically," "centered," "concentric," or "coaxial," not only represents such an exact arrangement but also represents a state in which there is a relative displacement having a tolerance or an angle or distance with which the same function is obtained.

In order to describe the present disclosure, a description will be performed below based on a spatial orthogonal coordinate system with an X-axis, a Y-axis, and a Z-axis perpendicular to each other. Each axis direction (X-axis direction, Y-axis direction, and Z-axis direction) means both directions in which each axis extends.

The X-direction, Y-direction, and Z-direction mentioned below are for describing the present disclosure so that the present disclosure can be clearly understood, and each direction can be defined differently depending on a reference.

The use of terms such as "first, second, or third" added in front of components mentioned below is only for avoiding confusion about the indicated components and is irrelevant to the order, importance, or main-subordinate relationship between the components. For example, a disclosure including only a second component may be implemented without a first component.

The singular forms used in the present specification are intended to include the plural forms as well, unless the context clearly indicates otherwise.

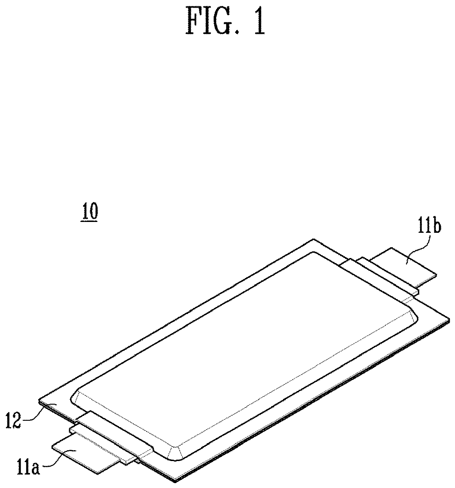

FIG. 1 is a view illustrating a battery cell 10 according to the present disclosure.

The battery cell 10 described in the present specification is a secondary battery that can be repeatedly reused by charging and discharging electrical energy. For example, the battery cell 10 may be a lithium secondary battery but is not limited thereto.

The battery cell 10 may be classified into a pouch-type secondary battery, a prismatic secondary battery, or a cylindrical secondary battery according to a shape thereof. In the present specification, an example of the pouch-type secondary battery will be described for the sake of convenience in the description, but the present disclosure is not limited thereto.

The battery cell 10 includes an electrode assembly (not shown). The electrode assembly may include a cathode, an anode, and a separator. The electrode assembly may be classified into a stacking, winding, stack-folding, or Z-stacking type electrode assembly according to a method of stacking the cathode, anode, and separator.

Each of the cathode and the anode may include a current collector. The cathode may include a cathode current collector, and the anode may include an anode current collector. The current collector may include a known conductive material to the extent that it does not cause a chemical reaction in the lithium secondary battery. For example, the current collector may include any one of stainless steel, nickel (Ni), aluminum (Al), titanium (Ti), copper (Cu), and alloys thereof and may be provided in various forms such as a film, sheet, or foil.

Each of the cathode and the anode may include an active material. The cathode may include a cathode active material, and the anode may include an anode active material. The cathode active material may be a material into which lithium ions may be intercalated and from which the lithium ions may be deintercalated, and the anode active material may be a material in which lithium ions may be intercalated and from which the lithium ions may be deintercalated. For example, the cathode active material may be a lithium metal oxide, and the anode active material may be any one among a carbon-based material such as crystalline carbon, amorphous carbon, a carbon composite, and carbon fiber, a lithium alloy, silicon (Si), and tin (Sn).

In addition, the cathode and the anode may further include a binder and a conductive material for improving mechanical stability and electrical conductivity, respectively.

The separator may be formed to prevent an electrical short circuit between the cathode and the anode and allow ions to flow. The type of separator is not particularly limited and may include a porous polymer film. For example, the separator may include a porous polymer film or a porous polymer non-woven fabric.

The electrolyte may include an electrolyte solution. The electrolyte solution may be a non-aqueous electrolyte solution. The electrolyte solution may include a lithium salt and an organic solvent. The electrolyte solution may further include an additive. The additive may form a film on the cathode or the anode through a chemical reaction in the battery. For example, a cathode interfacial film may be formed on the cathode, and an anode interfacial film may be formed on the anode.

Referring to FIG. 1, the battery cell 10 may further include an exterior material 12 which accommodates the electrode assembly therein. The exterior material 12 may accommodate the electrode assembly and electrolyte solution therein. The exterior material 12 may include an outer insulation layer and an inner adhesive layer each formed of a polymer material and include a metal layer interposed between the outer insulation layer and the inner adhesive layer. The exterior material 12 may include a material with high mechanical rigidity for protecting the battery cell 10 from external impacts. For example, a case may include an aluminum layer.

The battery cell 10 may further include an electrode lead 11 protruding outward from the exterior material 12. The electrode lead 11 may be connected to each of the cathode and anode of the battery cell 10. The electrode lead 11 may include a cathode lead 11a connected to the cathode and an anode lead 11b connected to the anode.

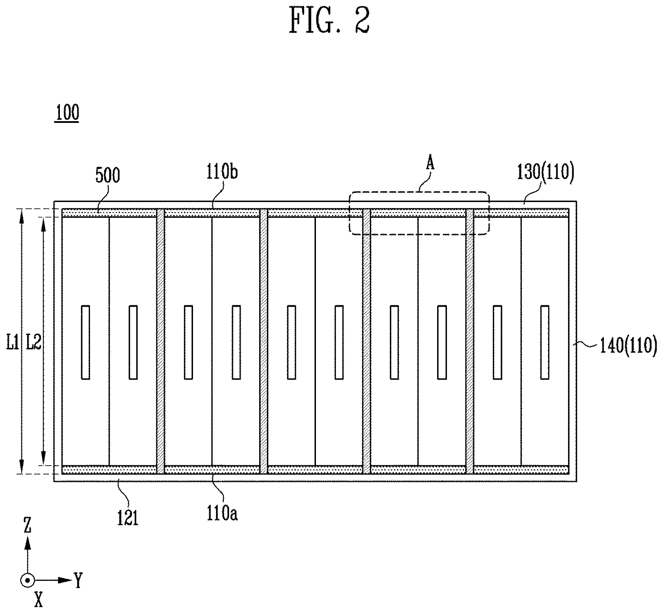

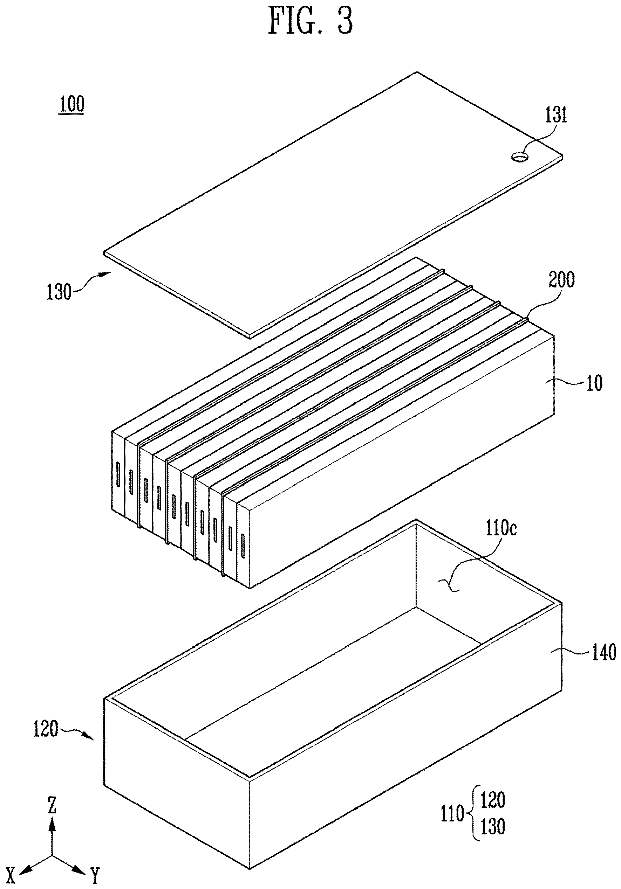

FIGS. 2 and 3 are views illustrating a battery assembly 100 according to the present disclosure.

The battery assembly 100 of the present disclosure includes a plurality of battery cells 10, an accommodation case 110, and heat transfer parts 200. The heat transfer parts 200 are located between the plurality of battery cells 10 to come into contact a first surface 110a and a second surface 110b opposite to the first surface 110a of the accommodation case 110. The plurality of battery cells 10 are positioned to be spaced apart from the first surface 110a and the second surface 110b.

Meanwhile, the battery assembly 100 of the present disclosure may include a battery module or battery pack. The battery module is a module in which one or more battery cells 10 are grouped and accommodated in a case to protect the battery cells 10 from external impacts, heat, vibrations, and the like and have high output and capacity characteristics. The battery pack is a pack in which one or more battery cells 10 or battery modules are grouped. The battery assembly 100 may be formed in a cell-to-pack structure in which the battery cells 10 are directly accommodated in a pack case.

When the battery assembly 100 is a battery module, the accommodation case 110 may be a module case. When the battery assembly 100 is a battery pack, the accommodation case 110 may be a pack case.

Referring to FIG. 2, the plurality of battery cells 10 may be stacked in a preset stacking direction. For example, the plurality of battery cells 10 may be stacked in a Y-direction.

The accommodation case 110 may accommodated the plurality of battery cells 10 therein. The accommodation case 110 may include an accommodation space for accommodating the plurality of battery cells 10. The accommodation case 110 may be provided as a hexahedron. Accordingly, the battery assembly 100 may be effectively stacked.

The accommodation case 110 includes the first surface 110a and the second surface 110b. Each of the first surface 110a and the second surface 110b may form one side surface of the accommodation space. The first surface 110a and the second surface 110b may be provided to face each other. For example, the first surface 110a may be a bottom surface, and the second surface 110b may be an upper surface.

Referring to FIG. 3, the accommodation case 110 may include an accommodation body 120 and an accommodation cover 130. The accommodation body 120 and the accommodation cover 130 may be combined to form the accommodation case 110.

The accommodation body 120 may include the first surface 110a and form the accommodation space. The plurality of battery cells 10 may be located in the accommodation body 120. The first surface 110a may be one surface provided inside the accommodation body 120.

Referring to FIG. 2, the accommodation body 120 may include a lower body 121. The plurality of battery cells 10 may be located on the lower body 121. A plurality of battery cells 10 may be stacked and positioned on the lower body 121 in the stacking direction. The lower body 121 may be provided in parallel to the stacking direction. Ultimately, among the surfaces of the lower body 121, a surface facing the plurality of battery cells 10 may be the first surface 110a.

The accommodation cover 130 may cover the accommodation body 120. The accommodation cover 130 may include the second surface 11 0b. The second surface 110b may be one surface provided inside the accommodation cover 130.

Referring to FIG. 3, the accommodation case 110 may further include an opening 110c which is an open surface. One surface of the accommodation body 120 may be open. The plurality of battery cells 10 may be inserted through the opening 110c.

The accommodation body 120 may have a rectangular parallelepiped shape with one open surface. A plurality of battery cells 10 may be inserted through the opening 110c. The accommodation cover 130 may cover the opening. In other words, the accommodation cover 130 may close one surface of the accommodation body 120 to seal the internal accommodation space.

The accommodation case 110 may further include an injection hole 131. The injection hole 131 may be formed by passing through one region of the accommodation case 110. The injection hole 131 may be provided in the accommodation cover 130.

A filler 500 may be injected into the accommodation case 110 through the injection hole. After the accommodation body 120 and the accommodation cover 130 are combined, the filler 500 may be injected through the injection hole 131. In another embodiment, after a plurality of battery cells are inserted through the opening 110c of the accommodation body 120, a filler 500 may be injected, and an accommodation cover 130 may be coupled to the accommodation body 120.

Referring to FIG. 2, the accommodation case 110 further includes a side body 140. The side body 140 may connect the first surface 110a and the second surface 110b to press the plurality of battery cells 10.

The accommodation body 120 may include the side body 140. The side body 140 may be formed to extend from a corner of the lower body 121. As a result, the side body 140 may connect the lower body 121 and the accommodation cover 130.

The side body 140 may press the plurality of battery cells 10. The side body 140 may press a battery cell 10 provided at an outermost side among the plurality of battery cells 10 in the stacking direction. The plurality of battery cells 10 may be suppressed from moving by being pressed by the side body 140.

For example, the plurality of battery cells 10 may be pressed by the side body 140 in the Y-direction. Accordingly, the movement of the battery cell 10a in a Z-direction may be prevented, and a state in which the battery cells 10 are spaced apart from the first surface 110a and the second surface 110b of the accommodation case 110 may be maintained.

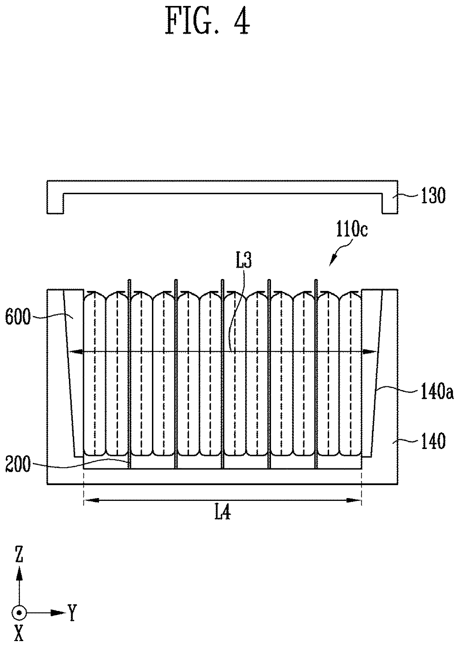

FIG. 4 is a view illustrating a battery assembly 100 according to another embodiment of the present disclosure.

Referring to FIG. 4, a side body 140 may include a facing surface 140a facing a plurality of battery cells 10. The side body 140 may include the facing surface 140a facing a battery cell 10 provided at an outermost side among the plurality of battery cells 10 in a stacking direction. For example, the facing surface 140a may be provided on the inner side of the side body 140 in a Y-direction.

The facing surface 140a may be provided to be inclined. This is to easily and effectively fix the battery cells 10 after the plurality of battery cells 10 are accommodated in an accommodation case 110.

For the side body 140 to press the battery cells 10, a width of the side body 140 should be approximately equal to a length of the plurality of battery cells 10. However, for the plurality of battery cells 10 to be inserted through an opening 110c, the width of the side body 140 should be greater than the length of the plurality of battery cells 10.

Accordingly, the side body 140 may be provided in a structure in which the width of the side body 140 in the stacking direction decreases as the distance from the opening 110c increases. In other words, the side body 140 may be provided to be inclined toward the plurality of battery cell as the distance from the opening 110c increases.

Accordingly, the plurality of battery cells 10 may be inserted through the opening 110c. In addition, after the plurality of battery cells 10 are inserted to a predetermined depth, the plurality of battery cells 10 may come into contact with an inclined surface. However, even in this case, the plurality of battery cells 10 may not come into contact with a lower surface of an accommodation body 120.

For example, referring to FIG. 4, the width of the side body 140 in the Y-direction may decrease toward the bottom in a Z-direction. An upper width L3 of the side body 140 may be greater than a lower width L4 of the side body 140.

The battery assembly 100 of the present disclosure may further include a pressing part 600. The pressing part 600 may be located between the side body 140 and the plurality of battery cells 10. The pressing part 600 may press the plurality of battery cells 10.

Referring to FIG. 4, the pressing part 600 may be positioned between the inclined surface of the side body 140 and the plurality of battery cells 10. When the width of the side body 140 is variable, the plurality of battery cells 10 may not be pressed uniformly.

One surface of the pressing part 600 may be provided to correspond to a shape of the side body 140. The other surface of the pressing part 600 may be provided in a flat shape to uniformly press the battery cells 10. Accordingly, the pressing part 600 may uniformly press the plurality of battery cells 10. In addition, the movement of the plurality of battery cells 10 can be prevented.

The pressing part 600 may include a plastic resin. For example, the pressing part 600 may include a polypropylene resin or modified polyphenylene oxide (MPPO) resin. Accordingly, the pressing part 600 may be formed to correspond to a shape of the accommodation case 110 through high moldability. In addition, the pressing part 600 can withstand strong impacts and have superior heat resistance and high electrical insulation properties.

For example, referring to FIG. 4, one surface of the pressing part 600 may be provided to be inclined. The other surface of the pressing part 600 may be provided to be flat to uniformly press the battery cells 10. Accordingly, damage to the battery cells 10 can be prevented.

In order to cool the battery assembly 100, one surface of the accommodation case 110 may include a heat sink and a thermal interface to perform indirect water cooling. The thermal interface may be provided as an adhesive of pad. That is, one side surface of the battery cell 10 may be fixedly coupled to the thermal interface.

When cell swelling occurs as the battery cell 10 is repeatedly charged and discharged, the battery cell 10 swells in a state in which one side surface of the battery cell 10 is fixed, and thus a non-uniform surface pressure may be applied to the cell. Accordingly, the performance of the battery assembly 100 may be degraded due to tearing of the battery cell 10 or lithium (Li)-plating.

In order to prevent damage to the battery cells 10 and effectively cool the battery cells 10, the battery assembly 100 of the present disclosure may further include heat transfer parts 200. The plurality of battery cells 10 may be present in a state of being spaced apart from the accommodation case 110 due to the heat transfer parts 200.

In other words, since one side surfaces of the plurality of battery cells 10 are not fixed to the thermal interface and are present in a state of being spaced apart from the accommodation case 110, a uniform surface pressure may be applied when cell swelling occurs. In addition, when cooling water is injected into the battery assembly 100 for immersion, a flow path may be formed through the space between the battery cells and the accommodation case.

The heat transfer parts 200 may be located between the plurality of battery cells 10. The heat transfer parts 200 may be located between the plurality of battery cells 10 in the stacking direction. In other words, the heat transfer parts 200 may be stacked with the plurality of battery cells 10 in the stacking direction.

Each of the heat transfer parts 200 may be provided as a board or plate with a small thickness. The thickness of the heat transfer part 200 in the stacking direction may be smaller than a thickness of the battery cell 10. This is to avoid lowering the energy density of the battery assembly and to minimize the volume occupied by the heat transfer parts 200 and to include a large number of battery cells 10.

The heat transfer parts 200 may be located between cell groups each grouped into a preset number of battery cells 10 among the plurality of battery cells 10. The preset number may be changed to correspond to the set specifications of the battery assembly 100.

For example, when the preset number is one, one heat transfer part 200 and one battery cell 10 may be alternately disposed. Referring to FIG. 2, when the preset number is two, a structure in which two battery cells 10 and one heat transfer part 200 are stacked may be repeated.

The heat transfer part 200 may cool adjacent cells. The heat transfer part 200 may have high thermal conductivity. The heat transfer parts 200 may be disposed between the plurality of battery cells and effectively decrease the temperature of the battery cells. Accordingly, the thermal stability of the battery assembly 100 can be improved.

For example, the heat transfer part may be formed of a material with a thermal conductivity of 15 W/m·K or more. The heat transfer part may include copper with a thermal conductivity of about 400 W/m·K, aluminum with a thermal conductivity of about 200 W/m·K, or stainless steel with a thermal conductivity of 15 W/m. K. The heat transfer part may include SUS304 stainless steel.

When a large number of heat transfer parts 200 are included, the stability and cooling efficiency of the battery cells 10 can be increased. Conversely, when a small number of heat transfer parts 200 are included, the stability of the battery cells 10 may be relatively lowered, but the energy density thereof may increase.

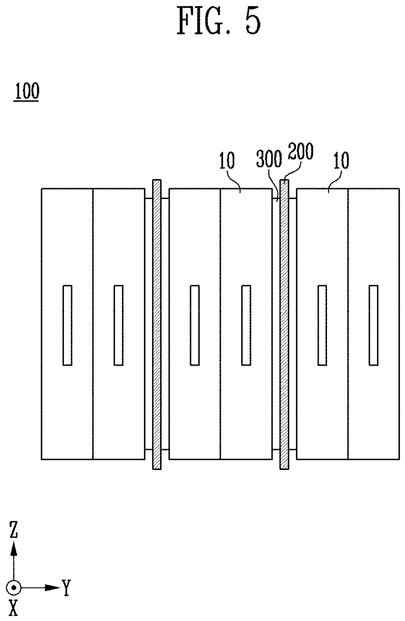

FIG. 5 is a view illustrating coupling parts 300 according to the present disclosure.

The battery assembly 100 of the present disclosure may further include coupling parts 300. The coupling parts 300 may couple the battery cells 10 and the heat transfer parts 200. Among the plurality of battery cells 10, the coupling parts 300 may couple the battery cells 10 adjacent to the heat transfer parts 200 and the heat transfer parts 200. Each of the coupling parts 300 may include an adhesive material.

For example, referring to FIG. 5, the coupling part 300 may be located between the battery cell 10 and the heat transfer part 200 to couple the battery cell 10 and the heat transfer part 200. The coupling part 300 may be a double-sided tape or hot melt adhesive.

As a result, referring to FIG. 2, the heat transfer parts 200 may be in contact with each of the first surface 110a and the second surface 110b of the accommodation case 110. The heat transfer parts 200 may be coupled to the plurality of battery cells 10, and the plurality of battery cells 10 may be positioned to be spaced apart from the first surface 110a and the second surface 110b of the accommodation case 110. A length L1 of the heat transfer part 200 may be greater than or equal to a length L2 of the plurality of battery cells in a direction from the first surface 110a toward the second surface 110b.

In addition, as the plurality of battery cells 10 may be pressed by the side body 140, positions thereof may be fixed, a state in which the plurality of battery cells 10 are spaced apart from the first surface 110a and the second surface 110b may be maintained. A flow path may be formed between the first surface 110a and the plurality of battery cells 10 and between the second surface 110b and the plurality of battery cells 10. A gas or liquid may flow through the flow path.

The battery assembly 100 of the present disclosure may further include a filler 500. The filler 500 may be provided in the accommodation case 110 and may come into contact with at least portions of the plurality of battery cells 10. The filler 500 may be injected through the opening 110c of the accommodation case 110. The filler 500 may be injected through the injection hole 131 of the accommodation case 110.

The filler 500 may be formed of an insulating material. For efficient electrical insulation, the filler 500 may have characteristics such as a high dielectric breakdown voltage, a low transfer factor, high specific heat, and high thermal conductivity.

In addition, the stability of the filler 500 may be maintained in terms of insulation properties despite external physical and chemical changes. Accordingly, the filler 500 may have superior insulation performance, and the battery cells 10 may be immersed therein, and thus the battery cells 10 can be cooled.

For example, the filler 500 may include transformer oil. Transformer oil is oil which is stable at high temperatures and has high insulation properties. The battery cells 10 may be maintained in an insulated state while the battery cells 10 are cooled through the transformer oil.

Oil having a high dielectric strength, high thermal conductivity, and chemical stability can be used as the transformer oil. The transformer oil may include any one or more among mineral oil, synthetic oil, alkyl benzene, polychlorinated biphenyl (PCB), mixed oil, and a high molecular weight hydrocarbon (R-TEMP).

Mineral oil-based transformer oil may include naphthenic hydrocarbons, paraffinic hydrocarbons, aromatic hydrocarbons, etc. Synthetic oil may mean that the properties of mineral oil have been adjusted through a chemical synthesis reaction. In addition, alkyl benzene may have superior electrical properties and oxidation stability, and thus may be mixed with mineral oil-based transformer oil and used.

PCB may have better electrical and chemical properties than general mineral oil. PCB is flame-retardant and has a large heat capacity and superior electrical insulation properties. In addition, PCB may be chemically stable, have acid and alkali resistance properties, may be extremely soluble in water, and may not be soluble in an organic solvent. R-TEMP is a type of flame-retardant transformer oil with higher flash and combustion points than mineral oil, making it highly fire-resistant and having a high dielectric breakdown voltage.

The filler 500 may be formed of a coolant. The filler 500 may include a coolant to decrease the temperature of the plurality of battery cells. As described above, since the heat transfer part 200 includes a material with high thermal conductivity, and the filler is provided as a coolant, the temperature of the battery assembly 100 can be kept low.

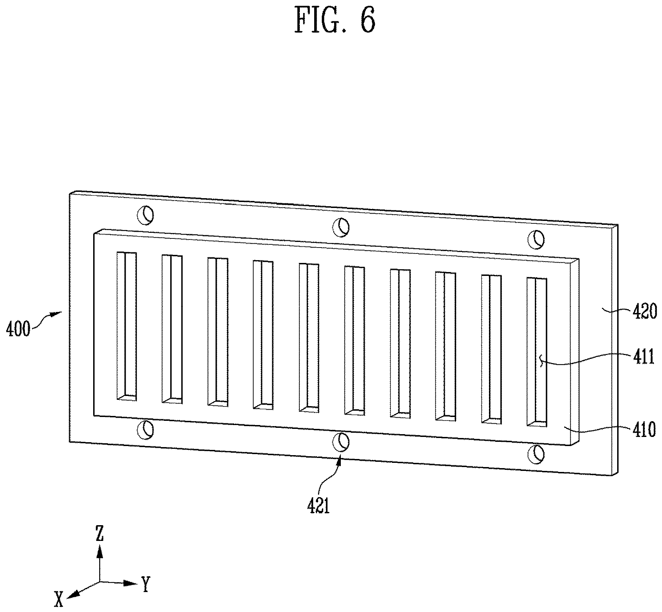

FIG. 6 is a view illustrating a busbar assembly 400 according to the present disclosure.

The battery assembly 100 of the present disclosure may further include the busbar assembly 400. The busbar assembly 400 may electrically connect the plurality of battery cells 10.

Referring to FIG. 6, the busbar assembly 400 may include a busbar 410 and a busbar frame 420. The busbar 410 may be in contact with the plurality of battery cells 10. Specifically, the busbar 410 may be in contact with the electrode lead 11 of the battery cell 10. Accordingly, the busbar 410 may electrically connect the battery cell 10 and an external device.

Referring to FIG. 6, the busbar 410 may be formed of a conductive material and include a slit 411 into which the electrode lead 11 is inserted. After the electrode lead 11 is inserted into the slit 411, the electrode lead 11 may be partially bonded to the busbar 410 so that the battery cell 10 may be electrically connected to the busbar 410. Referring to FIG. 6, the slit 411 may be a through hole passing through one region of the busbar 410. Without being limited thereto, the slit 411 may include an open side surface, and the electrode lead 11 may inserted through the open side surface.

The busbar frame 420 may be electrically insulated from the busbar 410 and coupled to the accommodation case 110. The busbar frame 420 may include a plastic resin. The busbar frame 420 may be located between the busbar 410 and the battery cell 10. Accordingly, the busbar frame 420 may prevent the busbar 410 from coming into contact with regions of the battery cell 10 other than the electrode lead 11.

The busbar frame 420 may be coupled to the accommodation case 110. For example, the busbar frame 420 may be coupled to the accommodation case 110 by bolting, riveting, or bonding.

The busbar frame 420 may include a through hole 421. The filler 500 may move through the through hole 421. In other words, the through hole 421 may be a flow path through which transformer oil moves.

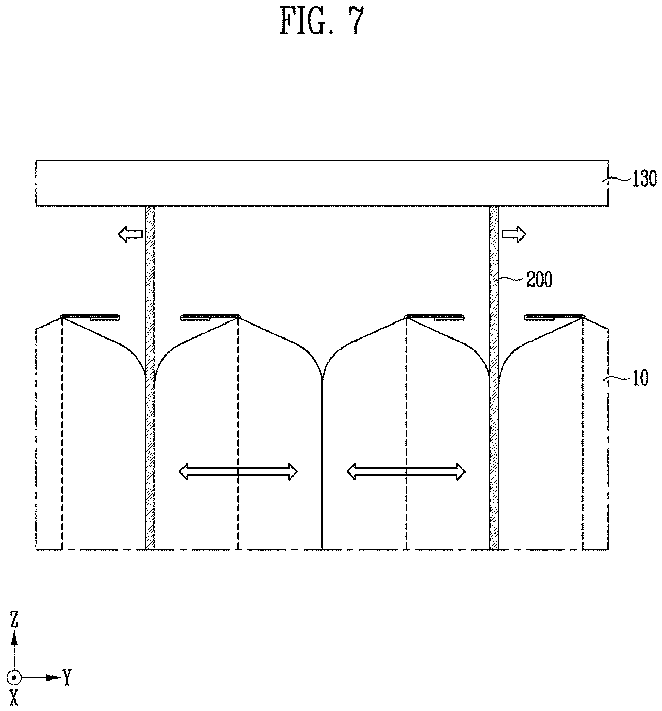

FIG. 7 is an enlarged view illustrating region A of FIG. 2.

Referring to FIG. 7, the heat transfer part 200 may move according to changes in the battery cell 10. The heat transfer part 200 may move while in contact with the accommodation case 110. The heat transfer part 200 may slidably move while in contact with the first surface 110a and the second surface 110b of the accommodation case 110. Accordingly, the heat transfer part 200 may maintain the stability of the battery assembly by flexibly responding to changes in the volume of the battery cell.

Referring to FIG. 7, the cell group may be provided between two heat transfer parts 200. When the battery cells 10 included in the cell group are swollen, the heat transfer parts 200 may move in directions away from each other. The heat transfer parts 200 may come into contact with wide areas of the battery cells 10 to uniformly transmit pressure thereto.

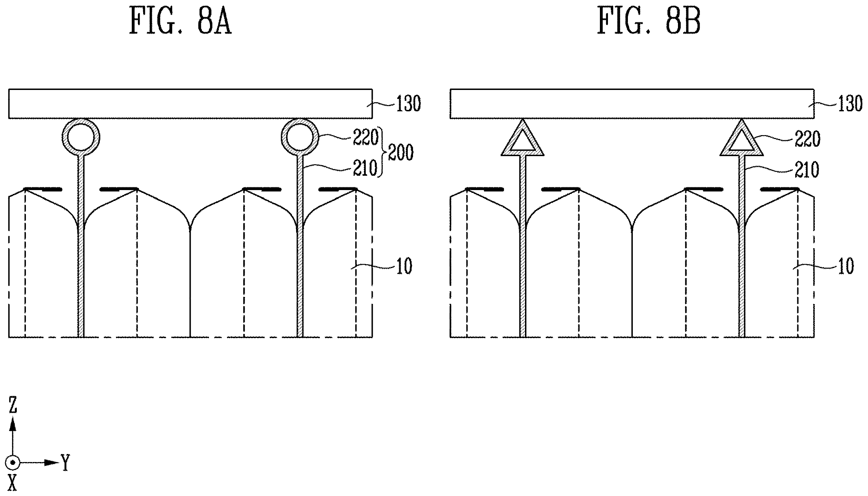

FIG. 8A and FIG. 8B are a set of views each illustrating heat transfer parts 200 according to another embodiment of the present disclosure.

Each of the heat transfer parts 200 may include a main body 210 and a contact portion 220. The main body 210 may be in contact with a plurality of battery cells 10. One surface of the battery cell 10 may be provided to be flat for ease of stacking. Adjacent battery cells 10 may come into contact with each other through one surfaces provided to be flat to maximize spatial efficiency. The main body 210 may be in contact with a flat surface of the battery cell 10.

One surface of the main body 210 may be in contact with any one battery cell 10, and the other surface of the main body 210 may be in contact with another battery cell 10. The entire surface of the battery cell 10 may be in contact with the main body 210. In other words, an area of the main body 210 may be greater than or equal to an area of the battery cell 10.

The heat transfer part 200 may include contact portions 220 which extend from both ends of the main body 210 and come into contact with an accommodation case 110. The contact portions 220 may be provided on both ends of the main body 210. An area of each of the contact portions 220 in contact with the accommodation case needs to be minimized so that the contact portion 220 moves while being in contact with the accommodation case 110.

To this end, the contact portion 220 may be provided in a circular or polygonal shape. For example, referring to FIG. 8A and Fig. 8B, since the contact portion 220 is provided in a circular shape or polygonal shape, the heat transfer part 200 may be stably supported between a first surface 110a and a second surface 110b of the accommodation case 110 and also easily move due to a low frictional force.

The contact portion 220 is not limited to the circular or polygonal shape and may be provided in any shape minimizing a contact area.

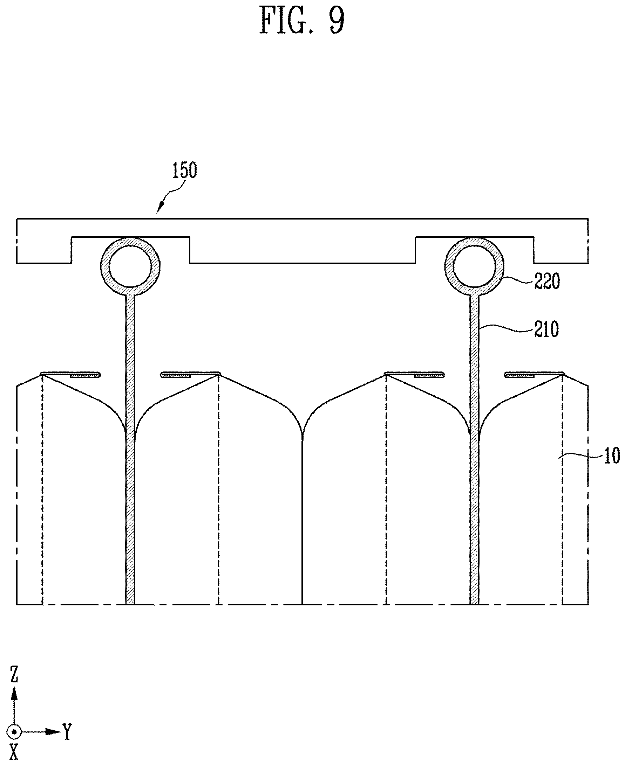

FIG. 9 is a view illustrating an accommodation case according to another embodiment of the present disclosure.

An accommodation case 110 may further include recessed portions 150. The recessed portion 150 may be formed by recessing one region of the accommodation case 110. At least one heat transfer part 200 may be located in each of the recessed portions 150. In other words, the number of recessed portions 150 may correspond to the number of heat transfer parts 200.

Referring to FIG. 9, the recessed portions 150 may be provided in regions corresponding to the heat transfer parts 200 and the accommodation case 110. Each of the recessed portions 150 may extend in a direction from a first surface 110a toward a second surface 110b and in a direction perpendicular to a stacking direction. For example, the recessed portion 150 may extend in an X-direction. This is because the heat transfer part 200 is provided with a flat surface perpendicular to a Y-direction. For the heat transfer part 200 to be disposed in the recessed portion 150, the recessed portion 150 should extend in the X-direction.

The movement of the heat transfer part 200 may be restricted by the recessed portion 150. The recessed portion 150 allows the heat transfer part 200 to move preset moving distance or less in the stacking direction. The preset distance may be smaller than or equal to a length of the recessed portion 150.

For example, referring to FIG. 9, the battery cell 10 may swell to move the heat transfer part 200 in the Y-direction. The movement of the heat transfer part 200 may be restricted by the recessed portion 150. The moving distance of the heat transfer part 200 may be smaller than the length of the recessed portion 150 in the Y-direction. Accordingly, the battery cell 10 may be prevented from deviating from its designated position to stably maintain the center of gravity of the battery cell 10, and thus damage to the battery assembly 100 can be prevented.

According to the present disclosure, damage to a battery assembly can be prevented by applying uniform surface pressure to a battery cell.

In addition, the stability of a battery assembly can be improved by uniformly managing a temperature rise and suppressing an excessive temperature rise of a battery cell.

In addition, the structural stability of a battery assembly can be improved and the damage due to external pressure can be prevented by minimizing the deviation of a battery cell from a preset position.

Since the present disclosure may be modified and implemented in various forms, the scope thereof is not limited to the above-described embodiments. Therefore, when a modified embodiment includes components of the scope of claims of the present disclosure, the components are included in the scope of rights of the present disclosure.

## Claims

1. A battery assembly comprising:
a plurality of battery cells stacked in a preset stacking direction;
an accommodation case which accommodates the plurality of battery cells therein; and
one or more heat transfer parts which are located between the plurality of battery cells and in contact with a first surface and a second surface opposite to the first surface of the accommodation case,
wherein the plurality of battery cells are positioned to be spaced apart from the first surface and the second surface.

2. The battery assembly of claim 1, wherein the accommodation case further includes:
an accommodation body which includes the first surface and forms an accommodation space; and
an accommodation cover which covers the accommodation body and includes the second surface.

3. The battery assembly of claims 1 or 2, wherein the accommodation case further includes a side body which connects the first surface and the second surface and presses the plurality of battery cells.

4. The battery assembly of claim 3, wherein:
the side body includes a facing surface facing the plurality of battery cells; and
the facing surface is inclined.

5. The battery assembly of claim 4, wherein:
the accommodation case further includes an opening, which is an open surface; and
the side body is inclined toward the plurality of battery cells as a distance from the opening increases.

6. The battery assembly of claims 1, 2 or 3, further comprising a pressing part which is located between the side body and the plurality of battery cells and presses the plurality of battery cells.

7. The battery assembly of any one of the preceding claims, wherein the heat transfer part is located between cell groups each grouped into a preset number of battery cells among the plurality of battery cells.

8. The battery assembly of any one of the preceding claims, wherein a length of the heat transfer part in a direction from the first surface toward the second surface is greater than or equal to a length of the plurality of battery cells.

9. The battery assembly of any one of the preceding claims, further comprising a busbar assembly which electrically connects the plurality of battery cells.

10. The battery assembly of any one of the preceding claims, further comprising a filler which is provided in the accommodation case and in contact with at least portions of the plurality of battery cells.

11. The battery assembly of claim 10, wherein the filler is formed of an insulating material or a coolant for decreasing a temperature of the plurality of battery cells.

12. The battery assembly of any one of the preceding claims, wherein the heat transfer part includes:
a main body in contact with the plurality of battery cells; and
a contact portion which extends from each of both ends of the main body, is in contact with the accommodation case, and is formed in a circular or polygonal shape.

13. The battery assembly of any one of the preceding claims, wherein the accommodation case includes a recessed portion which is formed by recessing one region of the accommodation case and in which each of the one or more heat transfer parts is located.

14. The battery assembly of claim 13, wherein the recessed portion extends in a direction from the first surface toward the second surface and in a direction perpendicular to the stacking direction.

15. The battery assembly of claim 13, wherein the heat transfer part moves a preset moving distance or less in the stacking direction due to the recessed portion.
